# EUROPEAN PATENT APPLICATION

(11) **EP 2 311 685 A2**
(43) Date of publication of application: **20.04.2011**
(21) Application number: 10187371.9
(22) Date of filing: 13.10.2010
(51) Int. Cl.: B60N 2/28

(54) **Seat device**

(30) Priority: 13.10.2009 GB 0917922
(71) Applicant: Burns, Gray John, Lanark ML11 0DY (GB)
(72) Inventor: Burns, Gray John, Lanark ML11 0DY (GB)
(74) Representative: Harrison Goddard Foote

(57) **Abstract**

A vehicle seat device (10) comprising: a seat portion (20); and a seat belt guide (30) provided at at least one lateral side of the seat portion (20), wherein the seat belt guide (30) comprises: a first longitudinal member (100) pivotably connected to the seat portion (20) such that it is rotatable from a first retracted position to a second position in which it extends upwards from the seat portion; and a second longitudinal member (110) pivotably connected to the first longitudinal member (100) such that it is rotatable from a first position in which it is substantially collinear with the first longitudinal member to a second position in which it extends forwards from the first longitudinal member.

## Description

The present invention relates to a seat device for a vehicle, such as at least a portion of a vehicle seat or a booster seat locatable in the vehicle. In particular, but not exclusively, the invention relates to a convertible seat device for a vehicle, such as at least a portion of a vehicle seat which is raisable and configured to provide a seat belt guide, or to a booster seat which is convertible into a suitcase or the like.

Seat belt systems within vehicles are configured for adults of average size. Therefore, children under a certain age or height require a booster seat. The booster seat is typically formed from a moulded plastic and has a seat portion which raises the child (from the height of the vehicle seat) and a seat belt guide on each side of the seat portion (to allow positioning on either side of the vehicle). The seat belt guide extends upwards and then forwards from a rear side of the seat portion.

The combination of the seat portion and seat belt guide allow the seat belt to sit firmly across the collar bone and chest of the child with the lap portion fitted to the hips. If a booster seat is not used, the seat belt will tend to be located at the child's neck and the stomach, which greatly increases the risk of internal damage in the event of a collision. In many countries, it is legally mandatory that a booster seat be provided for children under a certain age or height (the exact age or height varies from country to country). In most cases, the legal responsibility lies with the parent or guardian.

It is therefore necessary for a parent to always have a booster seat available when travelling by vehicle. This can be difficult, particularly when travelling abroad. Many airlines have become more restrictive on the available hand luggage allowance per passenger in terms or weight and/or size, and a booster seat is a bulky item. For instance, one airline has a restriction on the maximum dimensions of hand luggage of 55 cm in length by 40 cm in width by 20 cm in height. At the travel destination, car or taxi hire may be involved but a booster seat is often not available.

It is desirable to provide a vehicle seat which can raise a child to the correct height thus omitting the requirement for a booster seat. However, such a seat would still require a seat belt guide as provided by a booster seat and it is desirable that the vehicle seat is configured to provide this.

It is desirable to provide a booster seat which is portable. It is desirable to provide a booster seat which does not substantially reduce the available luggage allowance during travelling.

According to a first aspect of the present invention there is provided a vehicle seat device comprising:
a seat portion; and
a seat belt guide provided at at least one lateral side of the seat portion,
wherein the seat belt guide comprises:
a first longitudinal member pivotably connected to the seat portion such that it is rotatable from a first retracted position to a second position in which it extends upwards from the seat portion; and
a second longitudinal member pivotably connected to the first longitudinal member such that it is rotatable from a first position in which it is substantially collinear with the first longitudinal member to a second position in which it extends forwards from the first longitudinal member.

The first longitudinal member may be substantially horizontal when at the first retracted position. The first longitudinal member may be substantially vertical when at the second position.

The second longitudinal member may be substantially horizontal when at the second position.

The first and second longitudinal members may be adapted such that they rotate simultaneously.

The seat portion may include a recess for receiving one or both of the first and second longitudinal members when they are at the first position. One or both of the first and second longitudinal members may be flush with the seat portion when they are at the first position.

The second longitudinal member may include a resilient portion, such as padding, at an upper portion to provide an arm rest when the second longitudinal member is at the second position. The second longitudinal member may be configured such that the resilient portion provides a continuation of the seat portion when the second longitudinal member is at the first position.

The first longitudinal member may include a resilient portion at an upper portion to provide a continuation of the seat portion when the first longitudinal member is at the first position.

The seat device may be adapted such that one or both of the first and second longitudinal members is at least inhibited from rotation at one or both of the first and second positions. The seat device may be include releasable locking means for locking one or both of the first and second longitudinal members at one or both of the first and second positions.

The seat device may include a seat belt guide provided at both lateral sides of the seat portion.

According to one embodiment of the invention, the seat device may comprise a booster seat which is locatable on the seat of a vehicle.

The seat device may be configured to provide a suitcase of the like. The seat device may be hollow and define a lid member.

The seat device may include a carrying handle. The carrying handle may be retractable.

In an alternative embodiment, the seat belt guide may be positionable to provide the handle. Alternatively, the seat belt guide may be removable and relocatable to provide the handle. The seat belt guide from each lateral side of the seat device may be removable and relocatable such that each seat belt guide provides a complementary half of the handle.

The seat device may include one or more wheels.

At least a portion of the upper surface of the seat device may be concave to define a seating area. The portion of the upper surface may be movable from a concave profile to a convex profile to increase the capacity of the suitcase. The portion of the upper surface may be configured to snap buckle from a concave profile to a convex profile.

The seat device may include a cushion or liner member provided at the upper surface of the seat device. The liner member may be configured to provide a liner or to define a compartment or pocket within the suitcase.

Alternatively, according to another embodiment of the invention, the seat device may be provided as an existing seat within a vehicle. The seat device may include a platform member which is extendible to raise the height of the seat portion.

The seat belt guide may provide the operating means for extending the platform member. The seat belt guide may provide a rotating lever which is operable to extend the platform member. The extension of the platform member may be electrically, pneumatically or hydraulically assisted. Alternatively, rotation of one of the first and second longitudinal members may be configured to operate a switch member which in turn causes extension of the platform member.

According to a second aspect of the present invention there is provided a booster seat device comprising:
a seat portion; and
a seat belt guide provided at at least one lateral side of the seat portion,
wherein the seat belt guide is movable between a retracted and an extended position,
and wherein the booster seat device is configured to provide a suitcase.

The seat device may include a carrying handle. The carrying handle may be retractable.

Alternatively, the seat belt guide may be positionable to provide a handle. Alternatively, the seat belt guide may be removable and relocatable to provide the handle. The seat belt guide from each lateral side of the seat device may be removable and relocatable such that each seat belt guide provides a complementary half of the handle.

The seat device may include one or more wheels.

At least a portion of the upper surface of the seat device may be concave to define a seating area. The portion of the upper surface may be movable from a concave profile to a convex profile to increase the capacity of the suitcase. The portion of the upper surface may be configured to snap buckle from a concave profile to a convex profile.

The seat device may include a cushion or liner member provided at the upper surface of the seat device. The liner member may be configured to provide a liner or to define a compartment or pocket within the suitcase.

The seat belt guide may comprise a first longitudinal member pivotably connected to the seat portion such that it is rotatable from the retracted position to the extended position.

The seat belt guide may further comprise a second longitudinal member pivotably connected to the first longitudinal member such that it is rotatable from the retracted position in which it is substantially collinear with the first longitudinal member to the extended position in which it extends forwards from the first longitudinal member.

The first longitudinal member may be substantially horizontal when at the first retracted position. The first longitudinal member may be substantially vertical when at the extended position.

The second longitudinal member may be substantially horizontal when at the extended position.

The first and second longitudinal members may be adapted such that they rotate simultaneously.

The seat portion may include a recess for receiving one or both of the first and second longitudinal members when they are at the retracted position. One or both of the first and second longitudinal members may be flush with the seat portion when they are at the retracted position.

The second longitudinal member may include a resilient portion, such as padding, at an upper portion to provide an arm rest when the second longitudinal member is at the extended position. The second longitudinal member may be configured such that the resilient portion provides a continuation of the seat portion when the second longitudinal member is at the retracted position.

The first longitudinal member may include a resilient portion at an upper portion to provide a continuation of the seat portion when the first longitudinal member is at the retracted position.

The seat device may be adapted such that one or both of the first and second longitudinal members is at least inhibited from rotation at one or both of the retracted and extended positions. The seat device may be include releasable locking means for locking one or both of the first and second longitudinal members at one or both of the retracted and extended positions.

The seat device may include a seat belt guide provided at both lateral sides of the seat portion.

Various embodiments of the invention will now be described, by way of example only, in which:
Fig 1 is a perspective view of a first embodiment of a seat device;
Fig 2 is a side view of the seat device of Fig 1; and
Fig 3 is a perspective view of a second embodiment of a seat device.

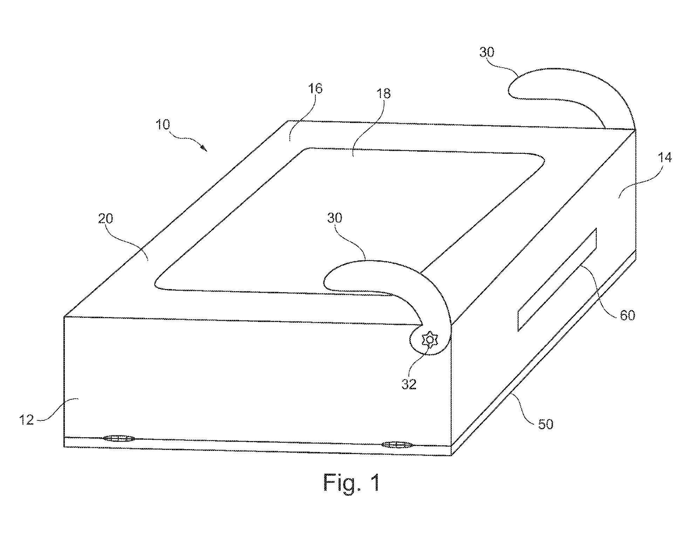

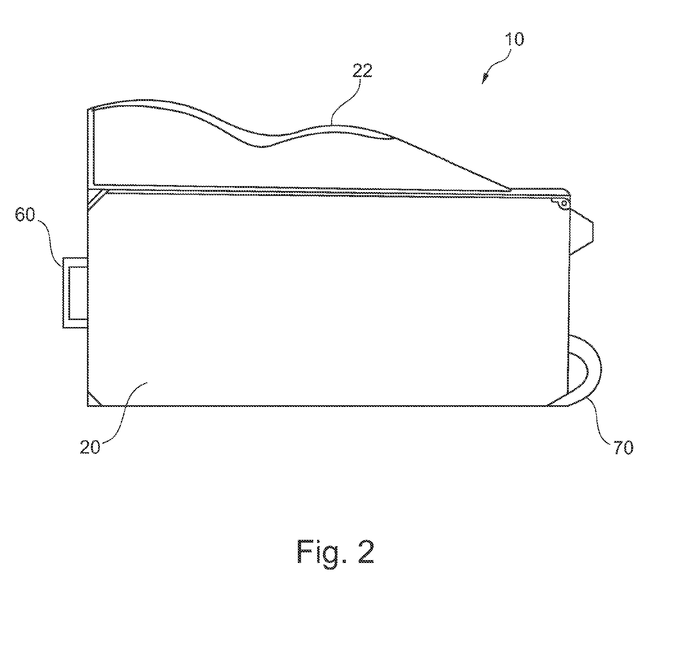

Figs 1 and 2 show a first embodiment of a booster seat device 10. The device 10 comprises a seat portion 20 and a seat belt guide 30 provided at each lateral side 12 of the seat portion 20.

Each seat belt guide 30 can be rotated about its respective pivot point 32 between a retracted and an extended position, and the extended position is shown in Fig 1. Notches, indents and the like (not shown) can be provided at the pivot pin 32 and bore of the seat belt guide 30. These can be adapted to be shallow so as to inhibit but not prevent rotation of the seat belt guide 30 away from the retracted and the extended positions. This will allow the user to know when the seat belt guide 30 is in the correct position. Alternatively, the seat device 10 could include releasable locking means for locking the seat belt guide 30 at the retracted and/or extended position. This could comprise a catch which is bias towards locking by a spring and a release member for acting against the spring to release the catch.

The booster seat device 10 is configured to provide a suitcase. The device 10 has the maximum dimensions of 55 cm in length by 40 cm in width by 20 cm in height and therefore meets the requirements by airlines for hand luggage. The inventor has recognised that there is a useful correspondence between the typical dimensions of a booster seat and hand luggage.

The seat portion 20 is hollow and defines a lid 50 which is attached by hinges 52 to the body of the seat portion 20. A retractable carrying handle 60 is provided at the rear side 14 of the seat portion 20. Two wheels 70 are provided at the front side 16 of the seat portion 20.

In an alternative embodiment, the seat belt guide 30 it pivotable about more than one axis and can be positioned to provide the handle at or near the rear side 14 of the seat portion 20 which is the top surface of the device when used as a suitcase. Alternatively, at least one of the seat belt guides 30 could be adapted so that it can be removed and then reattached on the rear side 14 to provide the handle. The seat belt guide 30 from each lateral side could be removable and relocatable so that each seat belt guide 30 provides a complementary half of the handle.

A portion of the upper surface 16 of the seat device 10 is concave to define a seating area 18. This portion can be adapted to be movable from a concave profile to a convex profile to increase the capacity of the suitcase. The portion can be configured to snap buckle from the concave profile to the convex profile and back again.

As shown in Fig 2, the seat device 10 includes a cushion mat 22 provided at the upper surface 16 of the seat device 10. The mat 22 can be configured to provide a liner, separator or pocket within the suitcase.

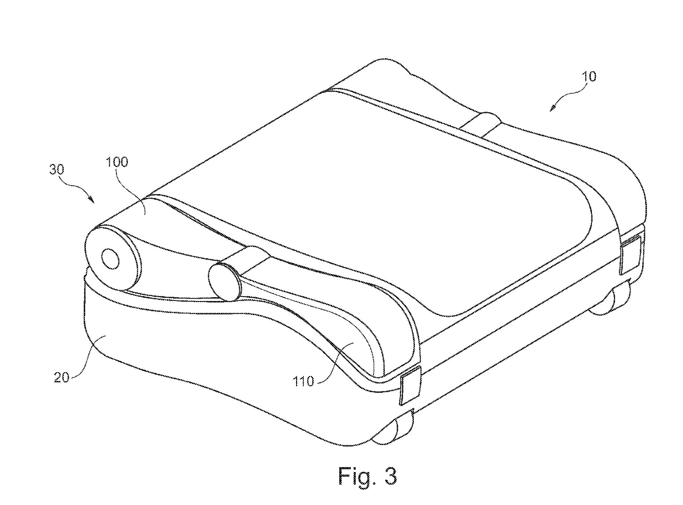

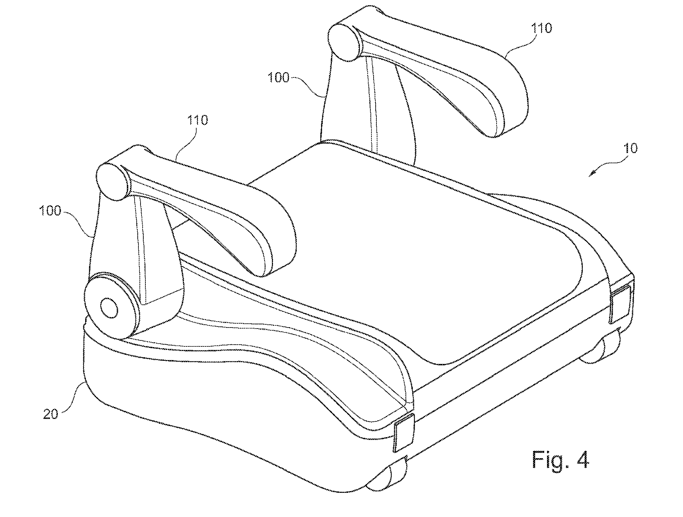

A second embodiment of the invention is shown in Figs 3 and 4, and like features are given like reference numerals.

As before, the seat belt guide 30 comprises a first longitudinal member or first link 100 which is pivotably connected to the seat portion 20 so that it is rotatable between a retracted position and an extended position. In this embodiment, the seat belt guide further comprises a second longitudinal member or second link 110 which is pivotably connected to the first link 100 so that it is also rotatable from the retracted position to the extended position.

The first link 100 is horizontal when at the retracted position and vertical when at the extended position. At the retracted position, the second link 110 is collinear with the first link. A stop can be provided to prevent rotation beyond the shared axis in one direction. At the extended position, the second link 110 is horizontal and extends forwards from the first link 100.

The seat portion 20 includes a recess for receiving the first and second links when they are at the retracted position. At this position, the first and second links are flush with the seat portion 20.

Each of the first and second links can include padding at an upper portion. This provides an arm rest when at the extended position and also provides a continuation of the seat portion 20 when at the retracted position.

The first and second links can be arranged to rotate simultaneously, for instance using connected cabling. This makes it easier for the user to know when the first and second links are in the correct position.

In an alternative embodiment of the invention (not shown in the drawings), the seat device 10 comprises an existing seat within a vehicle. The seat device is mounted on a platform which is extendible to raise the height of the seat portion 20. The seat belt guide provides the operating means for extending the platform. The seat belt guide acts as a rotating lever which is operable to extend the platform, perhaps with electrical, pneumatic or hydraulic assistance.

Whilst specific embodiments of the present invention have been described above, it will be appreciated that departures from the described embodiments may still fall within the scope of the present invention.

## Claims

1. A vehicle seat device comprising:
a seat portion; and
a seat belt guide provided at at least one lateral side of the seat portion,
wherein the seat belt guide comprises:
a first longitudinal member pivotably connected to the seat portion such that it is rotatable from a first retracted position to a second position in which it extends upwards from the seat portion; and
a second longitudinal member pivotably connected to the first longitudinal member such that it is rotatable from a first position in which it is substantially collinear with the first longitudinal member to a second position in which it extends forwards from the first longitudinal member.

2. A vehicle seat device as claimed in claim 1, wherein the first longitudinal member is substantially horizontal when at the first retracted position and substantially vertical when at the second position, and wherein the second longitudinal member is substantially horizontal when at the second position.

3. A vehicle seat device as claimed in any preceding claim, wherein the seat portion includes a recess for receiving one or both of the first and second longitudinal members when they are at the first position, and wherein one or both of the first and second longitudinal members are flush with the seat portion when they are at the first position.

4. A vehicle seat device as claimed in any preceding claim, wherein the second longitudinal member includes a resilient portion at an upper portion to provide an arm rest when the second longitudinal member is at the second position, and wherein the second longitudinal member is configured such that the resilient portion provides a continuation of the seat portion when the second longitudinal member is at the first position.

5. A vehicle seat device as claimed in any preceding claim, wherein the first longitudinal member includes a resilient portion at an upper portion to provide a continuation of the seat portion when the first longitudinal member is at the first position.

6. A vehicle seat device as claimed in any preceding claim, wherein the seat device includes releasable locking means for locking one or both of the first and second longitudinal members at one or both of the first and second positions.

7. A vehicle seat device as claimed in any preceding claim, wherein the seat device comprises a booster seat which is locatable on the seat of a vehicle.

8. A vehicle seat device as claimed in any preceding claim, wherein the seat device is configured to provide a suitcase.

9. A vehicle seat device as claimed in claim 8, wherein the seat belt guide is positionable to provide the handle.

10. A vehicle seat device as claimed in claim 9, wherein the seat belt guide from each lateral side of the seat device is positionable such that each seat belt guide provides a complementary half of the handle.

11. A vehicle seat device as claimed in any of claims 8 to 10, wherein at least a portion of the upper surface of the seat device is concave to define a seating area, and wherein the portion of the upper surface is movable from a concave profile to a convex profile to increase the capacity of the suitcase.

12. A vehicle seat device as claimed in claim 11, wherein the portion of the upper surface is configured to snap buckle from a concave profile to a convex profile.

13. A vehicle seat device as claimed in any of claims 8 to 12, including a cushion or liner member provided at the upper surface of the seat device, wherein the liner member is configured to provide a liner or to define a compartment or pocket within the suitcase.

14. A vehicle seat device as claimed in any preceding claim, including a platform member which is extendible to raise the height of the seat portion, and wherein the seat belt guide provides operating means for extending the platform member.

15. A booster seat device comprising:
a seat portion; and
a seat belt guide provided at at least one lateral side of the seat portion,
wherein the seat belt guide is movable between a retracted and an extended position,
and wherein the booster seat device is configured to provide a suitcase.
